# EUROPÄISCHE PATENTANMELDUNG

(11) **EP 4 671 169 A1**
(43) Veröffentlichungstag der Anmeldung: **31.12.2025**
(21) Anmeldenummer: 24183955.4
(22) Anmeldetag: 24.06.2024
(51) Int. Cl.: B65G 57/03, B65G 57/24

(54) **VORRICHTUNG ZUM KOMMISSIONIEREN VON STÜCKGUT IN EINEN ROLLBEHÄLTER UND ZUGEHÖRIGES VERFAHREN**

(71) Anmelder: Swisslog AG, 5033 Buchs/Aarau (CH)
(72) Erfinder: BREWKO, Frederick, 44575 Castrop-Rauxel (DE); SCHWANTGE, Martin, 58640 Iserlohn (DE); KUPPELWIESER, Stefan, 86609 Donauwörth (DE)
(74) Vertreter: Böss, Dieter Alexander

(57) **Zusammenfassung**

Die Erfindung betrifft eine Vorrichtung (10) zum Kommissionieren von Stückgut (1) in einen Rollbehälter (2), der einen auf Rollen (3) fahrbaren Ladeboden (4) und zwei gegenüberliegend angeordnete, einen Lagerraum (5) des Rollbehälters (2) für das Stückgut (1) seitlich begrenzende Seitenwände (6) umfasst, die sich von zwei gegenüberliegenden Randabschnitten des fahrbaren Ladebodens (4) nach oben erstrecken, aufweisend eine Zuführeinrichtung (11), welche gegenüberliegend angeordnete Führungsleitschienen (12.1, 12.2) aufweist, die ausgebildet sind, aufeinander zugestellte Oberkanten (6.1, 6.2) der beiden Seitenwände (6) eines Rollbehälters (2) derart weit voneinander wegzustellen, während der auf einer Plattform (9) abgestellte Rollbehälter (2) innerhalb eines Kommissionierschachtes (8) angehoben wird, dass die Oberkanten (6.1, 6.2) der beiden Seitenwände (6) des Rollbehälters (2) in Aufnahmetaschen (7) der Vorrichtung (10) eintauchen können. Die Erfindung betrifft auch ein zugehöriges Verfahren.

## Beschreibung

Die Erfindung betrifft eine Vorrichtung zum Kommissionieren von Stückgut in einen Rollbehälter, der einen auf Rollen fahrbaren Ladeboden und zwei gegenüberliegend angeordnete, einen Lagerraum des Rollbehälters für das Stückgut seitlich begrenzende Seitenwände umfasst, die sich von zwei gegenüberliegenden Randabschnitten des fahrbaren Ladebodens nach oben erstrecken. Die Vorrichtung weist einen Kommissionierschacht mit Aufnahmetaschen für die Seitenwände eines Rollbehälters auf, wobei die Aufnahmetaschen ausgebildet sind, während eines Kommissionierens von Stückgütern auf den Ladeboden des Rollbehälters innerhalb des Kommissionierschachtes, die Seitenwände des Rollbehälters zumindest teilweise oder vollständig aufzunehmen. Die Vorrichtung weist außerdem eine innerhalb des Kommissionierschachtes höhenverstellbare Plattform auf, die ausgebildet ist zum Abstellen eines Rollbehälters derart, dass durch ein Höhenverstellen der Plattform der darauf abgestellte Rollbehälter innerhalb des Kommissionierschachtes angehoben und/oder abgesenkt werden kann.

Die EP 3 536 640 A1 beschreibt eine Vorrichtung zum Kommissionieren von Ladegut in Rollbehälter, wobei der Rollbehälter einen Ladeboden und wenigstens eine seitliche Gitterwand aufweist, mit einer Kommissionierbühne, einem Kommissionierschacht, der sich bis zu einer Kommissionierebene, in der Ladegut während des Kommissionierens bewegt wird, auf der Kommissionierbühne erstreckt, einer Hub- und Absenkvorrichtung zum Heben und Absenken des Rollbehälters in dem Kommissionierschacht, einer in den Kommissionierschacht von der Seite her einfahrbaren und wieder ausfahrbaren Zunge zum Beladen mit Ladegut, einer Vorrichtung zum schrittweisen Absenken der Zunge während des Beladens mit Ladegut, so dass eine Oberseite einer zuletzt auf die Zunge gelegten Ladegutschicht etwa auf Höhe der Kommissionierebene angeordnet ist, und Abstreifmitteln, die zumindest beim Ausfahren der Zunge aus dem Kommissionierschacht Ladegut von der Oberseite der Zunge auf den Ladeboden des Rollbehälters abstreifen.

Aufgabe der Erfindung ist es, eine Vorrichtung zum Kommissionieren von Stückgut in einen Rollbehälter zu schaffen, die eine verbesserte Zuführeinrichtung aufweist, so dass Oberkanten von zwei Seitenwänden des Rollbehälters in zwei Aufnahmetaschen der Vorrichtung störungsfrei eintauchen können.

Die Aufgabe wird gelöst durch eine Vorrichtung zum Kommissionieren von Stückgut in einen Rollbehälter, der einen auf Rollen fahrbaren Ladeboden und zwei gegenüberliegend angeordnete, einen Lagerraum des Rollbehälters für das Stückgut seitlich begrenzende Seitenwände umfasst, die sich von zwei gegenüberliegenden Randabschnitten des fahrbaren Ladebodens nach oben erstrecken, aufweisend:
- einen Kommissionierschacht mit Aufnahmetaschen für die Seitenwände eines Rollbehälters, wobei die Aufnahmetaschen ausgebildet sind, während eines Kommissionierens von Stückgütern auf den Ladeboden des Rollbehälters innerhalb des Kommissionierschachtes, die Seitenwände des Rollbehälters zumindest teilweise oder vollständig aufzunehmen,
- eine innerhalb des Kommissionierschachtes höhenverstellbare Plattform, die ausgebildet ist zum Abstellen eines Rollbehälters derart, dass durch ein Höhenverstellen der Plattform der darauf abgestellte Rollbehälter innerhalb des Kommissionierschachtes angehoben und/oder abgesenkt werden kann, und
- eine Zuführeinrichtung, welche gegenüberliegend angeordnete Führungsleitschienen aufweist, die ausgebildet sind, aufeinander zugestellte Oberkanten der beiden Seitenwände eines Rollbehälters derart weit voneinander wegzustellen, während der auf der Plattform abgestellte Rollbehälter innerhalb des Kommissionierschachtes angehoben wird, dass die Oberkanten der beiden Seitenwände des Rollbehälters in die beiden Aufnahmetaschen eintauchen können.

Ein Kommissionierschacht findet im Allgemeinen seine Anwendung im Rahmen eines lageweise Aufbauens eines StückgutStapels. Dabei werden auf Höhe einer Kommissionierebene Stückgüter einzeln oder in Gruppen von mehreren Artikeln lageweise oder stückweise von der Kommissionierebene entnommen und beispielsweise auf eine Beladezunge oder einen im Aufbau befindlichen Stückgut-Stapel aufgesetzt. Zur Vereinfachung des Umsetzens der einzelnen Stückgüter oder der Lage bzw. Teil-Lage von Stückgütern wird nach vollendetem Aufbau einer Lage der teilbestückte Stückgut-Stapel innerhalb des Kommissionierschachtes abgesenkt, damit eine neue Lage an Stückgütern auf den im Aufbau befindlichen Stückgut-Stapel aufgebaut werden kann. Die Seitenwände des Kommissionierschachtes bilden dabei eine Begrenzung, innerhalb welcher der aufgebaute (Teil-) Stückgut-Stapel geführt ist.

Auf diese Weise können innerhalb des Kommissionierschachtes beispielsweise Paletten mit Stückgütern versehen werden. Wenn Stückgüter statt auf Paletten in einen Rollbehälter gestapelt werden sollen, so ergeben sich zusätzliche Anforderungen, um ein störungsfreies Stapeln von Stückgütern bzw. von ganzen Lagen an Stückgütern durchführen zu können.

Die allgemein verwendeten Rollbehälter weisen an zwei gegenüberliegenden Seiten Seitenwände auf, welche beim Fahren des Rollbehälters helfen sollen, zu verhindern, dass einzelne Stückgüter von dem Rollbehälter herunterfallen. Für den Transport von vollständig mit Stückgütern beladenen Rollbehältern werden auch Einweg-Stretchfolien verwendet, die um den gesamten Rollbehälter herumgewickelt werden und die sich auch an die Außenseiten der gegenüberliegenden Seitenwände anlegen, um ein unerwünschtes Herunterfallen von Stückgütern zuverlässig zu verhindern.

Die beiden Seitenwände von Rollbehältern werden im Allgemeinen von Drahtgittern gebildet, welche netzförmig oder gitterförmige Drahtgebilde aufweisen, die von einem rahmenartig umlaufenden Rohr begrenzt werden. Ein jeweiliger obenliegender Rohrabschnitt eines rahmenartig umlaufenden Rohres bildet eine jeweilige Oberkante einer Seitenwand des Rollbehälters. Die Seitenwände sind relativ lose an Randabschnitten eines Ladebodens des Rollbehälters gelagert und können demgemäß gegenüber einer vertikalen Ausrichtung je nach momentanen Zustand um einen gewissen Winkelbetrag entweder nach innen in den Lagerraum des Rollbehälters abgekippt sein oder gegebenenfalls auch nach außen vom Lagerraum des Rollbehälters weg herausgekippt sein. Meistens sind die Seitenwände des Rollbehälters jedoch nach innen abgekippt, so dass die beiden gegenüberliegenden Oberkanten der beiden Seitenwände aufeinander zugestellt positioniert sind. Dies erleichtert es zwar, dass der Rollbehälter von unten in den Kommissionierschacht eingeführt werden kann, allerdings ist in einer solchen Ausrichtung der Seitenwände der Lagerraum des Rollbehälters nur noch eingeschränkt zugänglich.

Bei den Vorrichtungen zum Kommissionieren von Stückgut in Rollbehälter werden daher zwei gegenüberliegend angeordnete Aufnahmetaschen vorgesehen, in welche die oberen Teilabschnitte der Seitenwände eintauchen sollen, wenn der auf der höhenverstellbaren Plattform der Vorrichtung positionierte Rollbehälter innerhalb des Kommissionierschacht angehoben wird bzw. durch Anheben von unten in den Kommissionierschacht eingeführt wird. Die Aufnahmetaschen können insbesondere geschlossenflächige Taschenwände aufweisen, welche die gitterartig offenen Seitenwände eines Rollbehälters überdecken, wenn die Seitenwände in die Aufnahmetaschen eingeführt sind. Die Aufnahmetaschen können innerhalb des Kommissionierschachtes fest installiert sein. Alternativ können die Aufnahmetaschen innerhalb des Kommissionierschachtes gegebenenfalls auch automatisch verstellbar gelagert sein.

Die beiden gegenüberliegenden Seitenwände des Rollbehälters können demgemäß jeweils in einer dem Kommissionierschacht zugeordneten, gegebenenfalls automatisch verstellbaren Aufnahmetasche aufgenommen sein, wobei in einer speziellen Ausführung die beiden verstellbaren Aufnahmetaschen vor oder nach dem Kommissionieren von Stückgütern in eine aufgeweitete Öffnungsstellung bewegt werden können, in der die Seitenwände des Rollbehälters zumindest im Wesentlichen vertikal verlaufend ausrichtet sind oder die Oberkanten der Seitenwände des Rollbehälters nach außen voneinander weggestellt sind.

Die beiden gegenüberliegenden Seitenwände des Rollbehälters können somit jeweils in einer dem Kommissionierschacht zugeordneten Aufnahmetasche aufgenommen sein, wobei in einer weiteren Ausführung die beiden verstellbaren Aufnahmetaschen nach dem Kommissionieren von Stückgütern gegebenenfalls auch in eine vorwiegend horizontal verengte Schließstellung zurückbewegt werden können, in der die Oberkanten der Seitenwände des Rollbehälters nach innen aufeinander zu bewegt sind, so dass diese und/oder die Aufnahmetaschen seitlich gegen den Stückgut-Stapel zugestellt und/oder angedrückt sind. Ein Zustellen und/oder Andrücken mittels der Seitenwände des Rollbehälters und/oder der Aufnahmetaschen kann dabei wahlweise einseitig oder zweiseitig erfolgen, d.h. es kann entweder nur eine der beiden Seitenwände aktiv bewegt werden oder es können beide Seitenwände aktiv bewegt werden.

Um die Aufnahmetaschen bestimmungsgemäß nutzen zu können, ist es unabdingbar, dass die Seitenwände des Rollbehälters zunächst in die Aufnahmetaschen eintauchen können, wenn der Rollbehälter innerhalb des Kommissionierschachtes oder unterhalb des Kommissionierschachtes angehoben wird. Die Oberkanten der Seitenwände des Rollbehälters sollen dazu von unten über die Öffnungen der Aufnahmetaschen in die Aufnahmetaschen eintauchen. Damit dies zuverlässig und störungsfrei stattfinden kann, müssen die Oberkanten der Seitenwände des Rollbehälters in eine vertikale Flucht mit den Öffnungen der Aufnahmetaschen gebracht werden.

Jede Aufnahmetasche umfasst eine dem Kommissionierschacht zugewandte erste Taschenwand und eine gegenüberliegende, vom Kommissionierschacht wegweisende zweite Taschenwand auf. Die erste Taschenwand und die zweite Taschenwand sind in einem Abstand voneinander angeordnet, so dass zwischen der ersten Taschenwand und der zweiten Taschenwand ein Spaltraum gebildet wird, welche den Aufnahmeraum für eine jeweilige Seitenwand des Rollbehälters bildet.

Die jeweilige Aufnahmetasche kann in einer speziellen Ausführungsform zwischen einer Ruhestellung, in welcher die Aufnahmetasche aus dem Kommissionierschacht entfernt ist, und einer Funktionsstellung, in welcher die Aufnahmetasche in den Kommissionierschacht hineinragt, um eine Seitenwand eines Rollbehälters aufnehmen zu können, automatisch verstellt werden. Dazu kann im Bereich der jeweiligen Aufnahmetasche in einer zugeordneten Schachtwand des Kommissionierschachtes ein Ausschnitt eingebracht sein, über den die Aufnahmetasche aus ihrer Ruhestellung in ihre Funktionsstellung in den Kommissionierschacht hineinbewegt werden kann. In der Ruhestellung der Aufnahmetasche kann die dem Kommissionierschacht zugewandte erste Taschenwand zumindest im Wesentlichen bündig mit der Ebene der zugeordneten Schachtwand abschließen. In der Funktionsstellung wiederum kann die in der Ruhestellung vom Kommissionierschacht wegweisende zweite Taschenwand ihrerseits zumindest im Wesentlichen bündig mit der Ebene der zugeordneten Schachtwand abschließen. In diesem Fall befindet sich die erste Taschenwand in einem die Breite des Aufnahmeraums der Aufnahmetasche bestimmenden Abstand von der zugeordneten Schachtwand entfernt innerhalb des Kommissionierschachtes.

Sollten die beiden gegenüberliegenden Seitenwände eines sich im Kommissionierschacht befindenden Rollbehälters sich in einer aufgeweiteten Öffnungsstellung befinden, so können die Oberkanten der Seitenwände maximal so weit voneinander entfernt positioniert sein, dass sie an den Innenseiten der gegenüberliegenden Schachtwände des Kommissionierschachtes anstehen. Dies ist eine unkritische Stellung, da die Oberkanten der Seitenwände dann problemlos in die Aufnahmeräume der Aufnahmetaschen eintauchen können, weil die äußere Taschenwand mit der zugeordneten Schachtwand zumindest im Wesentlichen fluchtet.

Anders verhält es sich jedoch, wenn die Seitenwände des Rollbehälters aufeinander zu abgekippt sind und somit die beiden Oberkanten der gegenüberliegenden Seitenwände aneinander angenähert sind. Wenigstens eine Oberkante oder sogar beide Oberkanten beider Seitenwände des Rollbehälters können dabei derart eng gestellt sein, dass die betreffende Oberkante der jeweiligen Seitenwand derart weit nach innen gestellt ist, dass sie sich jenseits der ersten Taschenwand befindet. Würde nun der Rollbehälter mit diesen weit nach innen gestellten Seitenwänden innerhalb des Kommissionierschachtes angehoben werden, so würden die Oberkanten der Seitenwände des Rollbehälters an den Aufnahmetaschen vorbeifahren und würden somit nicht in die Aufnahmetaschen eintauchen. Dies würde eine Störung im automatisierten Ablauf bedeuten.

Die erfindungsgemäße Zuführeinrichtung kann sicherstellen, dass die Oberkanten der Seitenwände des Rollbehälters stets in einen ausreichenden Mindestabstand zueinander gebracht werden, so dass die Seitenwände des Rollbehälters zuverlässig in die beiden gegenüberliegenden Aufnahmetaschen eintauchen können.

Indem die Zuführeinrichtung gegenüberliegend angeordnete Führungsleitschienen aufweist, die ausgebildet sind, aufeinander zugestellte Oberkanten der beiden Seitenwände eines Rollbehälters derart weit voneinander wegzustellen, während der auf der Plattform abgestellte Rollbehälter innerhalb des Kommissionierschachtes angehoben wird, dass die Oberkanten der beiden Seitenwände des Rollbehälters in die beiden Aufnahmetaschen eintauchen können, wird eine Vorrichtung zum Kommissionieren von Stückgut in einen Rollbehälter geschaffen, die eine verbesserte Zuführeinrichtung aufweist, so dass die Oberkanten der Seitenwände des Rollbehälters in die beiden Aufnahmetaschen störungsfrei eintauchen können.

Die Führungsleitschienen sind dabei derart gestaltet, dass sie keine bewegten Bauteile aufweisen und insbesondere auch keine aktiven Antriebe benötigen. Wird die höhenverstellbare Plattform der Vorrichtung vertikal nach oben bewegt und der Rollbehälter dadurch angehoben, stoßen die Oberkanten der beiden Seitenwände des Rollbehälters an die beiden gegenüberliegend angeordneten Führungsleitschienen, die stationär angeordnet sind, werden die beiden Seitenwände des Rollbehälters aufgrund der vertikal nach oben führenden Bewegung des Rollbehälters auseinanderbewegt. Die beiden Seitenwände des Rollbehälters werden also nicht aktiv bewegt, sondern passiv auseinanderbewegt, wenn die Oberkanten der beiden Seitenwände des Rollbehälters gegen die Führungsleitschienen anlaufen.

Die Oberkanten der beiden Seitenwände gleiten dabei entlang der Oberflächen der feststehenden Führungsleitschienen und werden aufgrund der Winkelstellungen der Führungsleitschienen auseinanderbewegt, synchron zu der vertikal nach oben führenden Bewegung des Rollbehälters.

Gegebenenfalls kann die Geschwindigkeit der vertikal nach oben führenden Bewegung des Rollbehälters derart angepasst werden, dass die beiden Seitenwände des Rollbehälters mit einer entsprechenden synchronen Bewegungsgeschwindigkeit voneinander weggestellt werden.

Die beiden gegenüberliegend angeordneten Führungsleitschienen verlaufen innerhalb des Kommissionierschachtes spiegelsymmetrisch schräg zur vertikalen Bewegungsrichtung, und zwar derart, dass die Unterkanten der beiden Führungsleitschienen näher beieinander liegen als die Oberkanten der beiden Führungsleitschienen, die weiter voneinander entfernt angeordnet sind.

Die Oberkanten der beiden Führungsleitschienen sind in einem Abstand voneinander angeordnet, der an den Abstand der Öffnungen der beiden Aufnahmetaschen angepasst ist. Dabei ist je nach Baugröße sicherzustellen, dass die Oberkanten der beiden Seitenwände des Rollbehälters unmittelbar unterhalb der beiden Öffnungen der Aufnahmetaschen in einer vertikalen Flucht mit den Öffnungen der Aufnahmetaschen ausgerichtet sind, wenn die beiden Seitenwände des Rollbehälters an den Oberkanten der beiden Führungsleitschienen seitlich anliegen.

Indem die Zuführeinrichtung mit den erfindungsgemäßen Führungsleitschienen ausgestattet ist, kann eine in der Höhe sehr flache Zuführeinrichtung geschaffen werden. Da die Führungsleitschienen statisch ausgebildet sind und demgemäß keine bewegten Bauteile umfassen, wird eine besonders zuverlässig arbeitende Vorrichtung geschaffen.

Die Zuführeinrichtung kann zwei gegenüberliegend angeordnete Führungsleitschienen aufweisen, die jeweils von einer starr angeordneten Führungsplatte gebildet wird, die sich von einer engstehenden Unterkante der Führungsplatte zu einer weitstehenden Oberkante der Führungsplatte erstreckt.

Im Falle von üblichen Rollbehältern weisen diese zwei gegenüberliegende Seitenwände auf. Demgemäß kann die Zuführeinrichtung zwei gegenüberliegend angeordnete Führungsleitschienen aufweisen, so dass jeweils einer Seitenwand des Rollbehälters eine Führungsleitschiene zugeordnet ist. Da die beiden gegenüberliegenden Seitenwände synchron voneinander weg bewegt werden sollen, sind demgemäß die beiden Führungsleitschienen mit ihren schrägen Ausrichtungen spiegelsymmetrisch angeordnet.

Die beiden Unterkanten der Führungsleitschienen befinden sich somit auf gleicher Höhe und sind näher aneinander angeordnet als die beiden Oberkanten der Führungsleitschienen, die weiter voneinander weg angeordnet sind. Auch die beiden Oberkanten der Führungsleitschienen liegen dabei auf gleicher Höhe.

Wenn die beiden Führungsleitschienen sich in der Arbeitsstellung innerhalb des Kommissionierschachtes befinden, liegt jede Oberkante der beiden Führungsleitschienen knapp unterhalb einer jeweiligen Öffnung einer zugeordneten Aufnahmetasche, und zwar zumindest annähernd in einer vertikalen Flucht mit der jeweiligen Öffnung der zugeordneten Aufnahmetasche.

Jede Führungsplatte kann einen unteren Führungsplattenabschnitt aufweisen, deren Flächennormale mit einer vertikalen Bewegungsrichtung der Plattform einen kleineren Anstellwinkel aufweist und kann einen sich an den unteren Führungsplattenabschnitt anschließenden oberen Führungsplattenabschnitt aufweisen, deren Flächennormale mit der vertikalen Bewegungsrichtung der Plattform einen größeren Anstellwinkel aufweist.

Der jeweilige untere Führungsplattenabschnitt kann eine ebene Gestalt aufweisen. Ebenso kann der jeweilige obere Führungsplattenabschnitt eine ebene Gestalt aufweisen. Der untere Führungsplattenabschnitt schließt winkelig an den obere Führungsplattenabschnitt an.

Die beiden unteren Führungsplattenabschnitte stehen demgemäß in der Arbeitsstellung der Zuführeinrichtung innerhalb des Kommissionierschachtes jeweils in einer flacheren Winkelstellung als die beiden oberen Führungsplattenabschnitte, die demgemäß in der Arbeitsstellung der Zuführeinrichtung innerhalb des Kommissionierschachtes jeweils in einer steileren Winkelstellung stehen. Aufgrund der flacheren Winkelstellungen der unteren Führungsplattenabschnitte werden die beiden gegenüberliegenden Oberkanten der beiden Seitenwände des Rollbehälters, bezogen auf die Geschwindigkeit mit welcher der Rollbehälter in dem Kommissionierschacht nach oben bewegt wird, entsprechend zügig aufgespreizt. Sobald die Oberkanten der beiden Seitenwände über die gesamte Fläche der unteren Führungsplattenabschnitte hinweg geglitten sind, gelangen die Oberkanten der beiden Seitenwände auf die oberen Führungsplattenabschnitte, wo sie nur noch mit einer reduzierten Geschwindigkeit weiter aufgespreizt werden.

Jede Führungsleitschiene kann eine reibungsmindernde Oberflächenschicht aufweisen. In einer Weiterbildung kann ein jeweiliger unterer Führungsplattenabschnitt eine erste reibungsmindernde Oberflächenschicht aufweisen und ein jeweiliger oberer Führungsplattenabschnitt eine zweite reibungsmindernde Oberflächenschicht aufweisen.

Die entsprechende Oberflächenschicht kann beispielsweise von einer Beschichtung gebildet werden, die auf die Oberfläche der Führungsleitschiene bzw. auf die Oberfläche des unteren Führungsplattenabschnitts und/oder des oberen Führungsplattenabschnitts aufgetragen ist.

Alternativ kann die Oberflächenschicht von einer separaten Schichtplatte gebildet werden, die an der Führungsleitschiene bzw. an dem unteren Führungsplattenabschnitt und/oder an dem oberen Führungsplattenabschnitt befestigt ist. Dazu können die separaten Schichtplatten beispielsweise mittels Schrauben an den Führungsleitschienen bzw. den Führungsplattenabschnitten angeschraubt sein. Dies hat den Vorteil, dass gegebenenfalls verschlissene Schichtplatten auf einfache Weise ausgetauscht und durch neue separate Schichtplatten ersetzt werden können. Die Schraubenköpfe der Schrauben können in den separaten Schichtplatten versenkt angeordnet sein.

Die Beschichtungen und/oder die separaten Schichtplatten können beispielsweise aus einem Polyethylen-Werkstoff, insbesondere HDPE hergestellt sein. Alternativ können die Beschichtungen und/oder die separaten Schichtplatten beispielsweise auch aus einem PTFE-Werkstoff hergestellt sein.

Die Führungsleitschienen können an einem gemeinsamen Träger befestigt sein, der bezüglich des Kommissionierschachtes zwischen einer Verwahrungsstellung, in welcher die Führungsleitschienen aus dem Kommissionierschacht entfernt sind, und einer Arbeitsstellung, in welcher die Führungsleitschienen zum voneinander Wegstellen der Oberkanten der beiden Seitenwände des Rollbehälters in den Kommissionierschacht hineinragen, verstellbar ist.

Indem die Führungsleitschienen an einem gemeinsamen Träger befestigt sind, können die Führungsleitschienen zusammen gleichzeitig zwischen der Verwahrungsstellung und der Arbeitsstellung hin und her bewegt werden. Wenn die Führungsleitschienen über den gemeinsamen Träger verstellbar gelagert sind, können die Führungsleitschienen auf einfache Weise aus dem Kommissionierschacht entfernt werden, wenn diese nicht benötigt werden oder diese erforderlich ist. So kann beispielsweise vorgesehen sein, dass innerhalb des Kommissionierschachtes auch einfache Paletten mit Stückgütern automatisch beladen werden sollen, die demgemäß überhaupt keine Seitenwände aufweisen, so dass entsprechende Zuführeinrichtungen gar nicht benötigt werden. Aufgrund der einfachen, automatischen Verstellbarkeit der Führungsleitschienen können somit Rollbehälter und Paletten wahlweise in dem Kommissionierschacht beladen werden.

Gegebenenfalls kann es auch vorgesehen sein, dass ein innerhalb des Kommissionierschachtes angeordneter Rollbehälter nach dem Beladen mit Stückgütern nicht wieder nach unten aus dem Kommissionierschacht entfernt wird, sondern möglichweise nach oben aus dem Kommissionierschacht herausgefahren werden soll. In einem solchen Fall müsste der Ladeboden an den Führungsleitschienen vertikal vorbeigeführt werden, was in der Arbeitsstellung der Führungsleitschienen nicht möglich wäre. Wenn die Führungsleitschienen also in die Verwahrungsstellung bewegt werden können, wird der Kommissionierschacht freigestellt und der Rollbehälter kann den Kommissionierschacht ungehindert nach oben verlassen.

Der Träger kann mittels wenigstens einer Linearführung an einem Grundgestell der Vorrichtung zwischen der Verwahrungsstellung der Führungsleitschienen und der Arbeitsstellung der Führungsleitschienen linear verstellbar gelagert sein.

Wenn der Träger mittels wenigstens einer Linearführung an einem Grundgestell der Vorrichtung zwischen der Verwahrungsstellung der Führungsleitschienen und der Arbeitsstellung der Führungsleitschienen linear verstellbar gelagert ist, können die Führungsleitschienen mittels einer einfachen geradlinigen Bewegung zwischen der Verwahrungsstellung und der Arbeitsstellung hin und her bewegt werden. Ein solches Bewegen der Führungsleitschienen zwischen der Verwahrungsstellung und der Arbeitsstellung hin und her kann insbesondere automatisch erfolgen. Damit die Führungsleitschienen automatisch bewegt werden können, kann ein automatisch ansteuerbarer Antrieb vorgesehen werden.

Der Träger kann demgemäß mittels wenigstens eines ansteuerbaren Pneumatikzylinders automatisch verstellbar an dem Grundgestell der Vorrichtung gelagert sein. Der Pneumatikzylinder kann über eine Steuervorrichtung automatisch ansteuerbar sein. Die Steuervorrichtung kann den Pneumatikzylinder insbesondere über elektrisch ansteuerbare Ventile ansteuern. Ein Pneumatikzylinder ermöglicht insbesondere eine sehr schnelle Verstellung der Führungsleitschienen zwischen der Verwahrungsstellung und der Arbeitsstellung.

Die Vorrichtung kann einen ersten Positionssensor aufweisen, der ausgebildet und eingerichtet ist, zu erfassen, wenn sich der Träger und/oder die Führungsleitschienen in der Verwahrungsstellung befinden.

Der erste Positionssensor kann beispielsweise an dem Grundgestell der Vorrichtung angeordnet sein und eingerichtet sein, eine erste Referenzfläche an dem verstellbar gelagerten Träger, der die Führungsleitschienen aufweist, zu erfassen. Der erste Positionssensor kann beispielsweise ein erster Abstandssensor sein. Der erste Abstandssensor kann ein berührungslos arbeitender Sensor sein. Der erste Abstandssensor kann insbesondere ein induktiver, kapazitiver, magnetischer, optischer Näherungssensor oder ein Ultraschall-Näherungssensors sein. Die erste Referenzfläche kann beispielsweise durch eine Metallzunge oder einem ersten Winkelblech gebildet werden, das an dem verstellbar gelagerten Träger ausgebildet oder daran befestigt ist.

In der Verwahrungsstellung des Trägers ist die erste Referenzfläche sehr nahe an dem ersten Positionssensor positioniert, so dass der erste Positionssensor die erste Referenzfläche erfassen kann und ein zugeordnetes Signal an eine Steuervorrichtung übermitteln kann, die ihrerseits den Antrieb für das Bewegen des Trägers automatisch ansteuert. Befindet sich der Träger nicht in seiner Verwahrungsstellung ist die erste Referenzfläche derart weit von dem ersten Positionssensor entfernt positioniert, so dass der erste Positionssensor die erste Referenzfläche nicht mehr erfassen kann und demgemäß kein Signal an die Steuervorrichtung übermittelt.

Die Vorrichtung kann einen zweiten Positionssensor aufweisen, der ausgebildet und eingerichtet ist, zu erfassen, wenn sich der Träger und/oder die Führungsleitschienen in der Arbeitsstellung befinden.

Der zweite Positionssensor kann beispielsweise an dem Grundgestell der Vorrichtung angeordnet sein und eingerichtet sein, eine zweite Referenzfläche an dem verstellbar gelagerten Träger, der die Führungsleitschienen aufweist, zu erfassen. Der zweite Positionssensor kann beispielsweise ein zweiter Abstandssensor sein. Der zweite Abstandssensor kann ein berührungslos arbeitender Sensor sein. Der zweite Abstandssensor kann insbesondere ein induktiver, kapazitiver, magnetischer, optischer Näherungssensor oder ein Ultraschall-Näherungssensors sein. Die zweite Referenzfläche kann beispielsweise durch eine Metallzunge oder einem zweiten Winkelblech gebildet werden, das an dem verstellbar gelagerten Träger ausgebildet oder daran befestigt ist.

In der Arbeitsstellung des Trägers ist die zweite Referenzfläche sehr nahe an dem zweiten Positionssensor positioniert, so dass der zweite Positionssensor die zweite Referenzfläche erfassen kann und ein zugeordnetes Signal an eine Steuervorrichtung übermitteln kann, die ihrerseits den Antrieb für das Bewegen des Trägers automatisch ansteuert. Befindet sich der Träger nicht in seiner Arbeitsstellung ist die zweite Referenzfläche derart weit von dem zweiten Positionssensor entfernt positioniert, so dass der zweite Positionssensor die zweite Referenzfläche nicht mehr erfassen kann und demgemäß kein Signal an die Steuervorrichtung übermittelt.

Die Vorrichtung kann eine optische Sensoreinrichtung aufweisen, die ausgebildet und eingerichtet ist, zur Erkennung der Oberkanten der Seitenwände eines in dem Kommissionierschacht vorhandenen Rollbehälters, wenn sich die Oberkanten der Seitenwände in einer vertikalen Flucht mit den Öffnungen der Aufnahmetaschen befinden.

Die optische Sensoreinrichtung kann eine Abschattung erfassen, wenn eine Oberkante einer Seitenwand des Rollbehälters sich in einer vertikalen Flucht mit der zugeordneten Aufnahmetasche befindet.

Eine jeweilige optische Sensoreinrichtung kann in einem Abstand unterhalb der Öffnung einer Aufnahmetasche angeordnet sein und eine optische Achse aufweisen, die zumindest im Wesentlichen auf die Öffnung der Aufnahmetasche gerichtet ist. Der Abstand der optischen Sensoreinrichtung von der Öffnung der Aufnahmetasche definiert in Höhenrichtung den Freiraum innerhalb dem eine Oberkante einer Seitenwand des Rollbehälters unter die Öffnung der Aufnahmetasche eintreten kann. Wird die Oberkante der Seitenwand des Rollbehälters in den Strahlengang der optischen Achse der optischen Sensoreinrichtung geführt, so erfasst die optische Sensoreinrichtung dieses Ereignis und liefert an die Steuervorrichtung ein entsprechendes Signal.

Die optische Sensoreinrichtung kann beispielsweise zwei oder drei Einzelsensoren umfassen, die gemeinsam eine Öffnung einer Aufnahmetasche überwachen. Die mehreren Einzelsensoren können insoweit auch eine redundante, gegebenenfalls diversitäre Erfassung ermöglichen.

Die Aufgabe wird auch gelöst durch ein Verfahren zum Ansteuern einer Zuführeinrichtung einer Vorrichtung nach einem der beschriebenen Ausführungsformen. Das Verfahren weist den Schritt auf:
- automatisches Herausbewegen der Zuführeinrichtung aus ihrer Verwahrungsstellung in ihre Arbeitsstellung, vor oder während eines Anhebens eines Rollbehälters, der auf der höhenverstellbaren Plattform innerhalb des Kommissionierschachtes positioniert ist, durch automatisch angesteuertes Hochfahren der höhenverstellbaren Plattform.

Zur Durchführung des Verfahrens kann die Steuervorrichtung der Vorrichtung zum Kommissionieren von Stückgut in einen Rollbehälter, die momentane Höhenposition der höhenverstellbaren Plattform automatisch erfassen. Außerdem kann die Steuervorrichtung automatisch erfassen, ob momentan ein Rollbehälter auf der höhenverstellbaren Plattform abgestellt ist.

Wird durch die Steuervorrichtung automatisch erfasst, dass ein Rollbehälter auf der höhenverstellbaren Plattform abgestellt ist und erfasst, dass sich die Oberkanten der Seitenwände des Rollbehälters den Öffnungen der Aufnahmetaschen während eines automatischen Anhebens des Rollbehälters durch ein Höhenverstellen der Plattform nähern, so wird die Zuführeinrichtung automatisch aus ihrer Verwahrungsstellung in ihre Arbeitsstellung herausbewegt, indem die Steuervorrichtung einen Antrieb ansteuert, welcher den Träger, an dem die Zuführeinrichtung angeordnet ist, aus der Verwahrungsstellung in die Arbeitsstellung bewegt.

Nachdem die Oberkanten der Seitenwände des Rollbehälters in die Aufnahmetaschen eingeführt sind, kann vorgesehen sein, dass die Steuervorrichtung die Zuführeinrichtung wieder automatisch aus ihrer Arbeitsstellung in ihre Verwahrungsstellung zurückbewegt. Gegebenenfalls kann die Zuführeinrichtung jedoch auch innerhalb des Kommissionierschachtes verbleiben.

Ein Zurückbewegen der Zuführeinrichtung in ihre Verwahrungsstellung kann insbesondere dann zweckmäßig sein, wenn dem Rollbehälter nachfolgend kein weiterer Rollbehälter automatisch mit Stückgut beladen werden soll, sondern beispielsweise eine Palette, die keine Seitenwände aufweist.

In einer Weiterbildung des Verfahrens kann vorgesehen sein, dass das automatische Herausbewegen der Zuführeinrichtung aus ihrer Verwahrungsstellung in ihre Arbeitsstellung unabhängig der momentanen Ausrichtung der Seitenwände des Rollbehälters erfolgt.

In einer solchen speziellen Weiterbildung des Verfahrens wird die Zuführeinrichtung stets in die Arbeitsstellung bewegt, wenn ein Rollbehälter innerhalb des Kommissionierschachtes angehoben wird, um die Seitenwände in die Aufnahmetaschen einzuführen. Sollten sich die Seitenwände des Rollbehälters mit ihren Oberkanten bereits in einer vertikalen Flucht mit den Öffnungen der Aufnahmetaschen befinden, so kontaktieren die Oberkanten der Seitenwände die Führungsleitschienen der Zuführeinrichtung überhaupt nicht oder nur in geringem Maße, und sie können unmittelbar in die Aufnahmetaschen eintauchen.

Wenn sich die Seitenwände des Rollbehälters mit ihren Oberkanten hingegen nicht in einer vertikalen Flucht mit den Öffnungen der Aufnahmetaschen befinden, so kontaktieren die Oberkanten der Seitenwände die Führungsleitschienen der Zuführeinrichtung und demgemäß werden die beiden gegenüberliegenden Seitenwände des Rollbehälters aufgespreizt, so dass sie in die Aufnahmetaschen eintauchen können.

In einer alternativen Weiterbildung des Verfahren kann vorgesehen sein, dass das automatische Herausbewegen der Zuführeinrichtung aus ihrer Verwahrungsstellung in ihre Arbeitsstellung ausschließlich dann erfolgt, wenn die Seitenwände des Rollbehälters Ausrichtungen aufweisen, in denen die Oberkanten der Seitenwände sich außerhalb einer vertikalen Flucht mit den Öffnungen der Aufnahmetaschen befinden.

Hierbei können entsprechende optische Sensoren vorgesehen werden, welche erfassen können, ob sich die Oberkanten der Seitenwände des Rollbehälters in einer vertikalen Flucht mit den Öffnungen der Aufnahmetaschen befinden.

Wenn sich die Seitenwände des Rollbehälters mit ihren Oberkanten bereits in einer vertikalen Flucht mit den Öffnungen der Aufnahmetaschen befinden, so wird demgemäß die Zuführeinrichtung in ihrer Verwahrungsstellung belassen und nicht in ihre Arbeitsstellung bewegt.

Wenn sich die Seitenwände des Rollbehälters mit ihren Oberkanten hingegen nicht in einer vertikalen Flucht mit den Öffnungen der Aufnahmetaschen befinden, so wird demgemäß die Zuführeinrichtung aus ihrer Verwahrungsstellung in ihre Arbeitsstellung bewegt.

Ergänzend kann bei diesem Verfahren vorgesehen sein, dass die Ausrichtungen der Seitenwände, vor oder während eines automatisch angesteuerten Hochfahrens der höhenverstellbaren Plattform, um einen Rollbehälter, der auf der höhenverstellbaren Plattform innerhalb des Kommissionierschachtes positioniert ist, anzuheben, automatisch durch eine optische Sensoreinrichtung erfasst werden und in Abhängigkeit der von der Sensoreinrichtung erfassten Stellungen der Oberkanten der Seitenwände bezüglich einer vertikalen Flucht mit den Öffnungen der Aufnahmetaschen, die Zuführeinrichtung automatisch aus ihrer Verwahrungsstellung in ihre Arbeitsstellung herausbewegt wird, wenn sich die Oberkanten der Seitenwände nicht in einer vertikalen Flucht mit den Öffnungen der Aufnahmetaschen befinden, oder in ihrer Verwahrungsstellung verbleibt, wenn sich die Oberkanten der Seitenwände bereits in einer vertikalen Flucht mit den Öffnungen der Aufnahmetaschen befinden.

Konkrete Ausführungsbeispiele der Erfindung sind in der nachfolgenden Beschreibung unter Bezugnahme auf die beigefügten Figuren näher erläutert. Konkrete Merkmale dieser exemplarischen Ausführungsbeispiele können unabhängig davon, in welchem konkreten Zusammenhang sie erwähnt sind, gegebenenfalls auch einzeln oder in weiteren Kombinationen betrachtet, allgemeine Merkmale der Erfindung darstellen.

Es zeigen:
- Fig. 1: eine perspektivische Darstellung einer beispielhaften Vorrichtung zum Kommissionieren von Stückgut in einen Rollbehälter,
- Fig. 2: eine schematische Darstellung eines beispielhaften Rollbehälters mit darauf gelagertem Stückgut und zwei gegenüberliegenden Seitenwänden, die in Aufnahmetaschen eingesteckt sind,
- Fig. 3: eine schematische Seitenansicht einer beispielhaften Ausführungsform einer erfindungsgemäßen Zuführeinrichtung in einem Kommissionierschacht der Vorrichtung gemäß Fig. 1,
- Fig. 4: eine perspektivische Darstellung einer beispielhaften Ausführungsform der erfindungsgemäßen Zuführeinrichtung in einer Alleinstellung,
- Fig. 5: eine Draufsicht auf die Zuführeinrichtung gemäß Fig. 4,
- Fig. 6: eine Seitenansicht der Zuführeinrichtung gemäß Fig. 4, und
- Fig. 7: eine schematische Darstellung eines Ablaufs der Schritte in einem erfindungsgemäßen Verfahren.

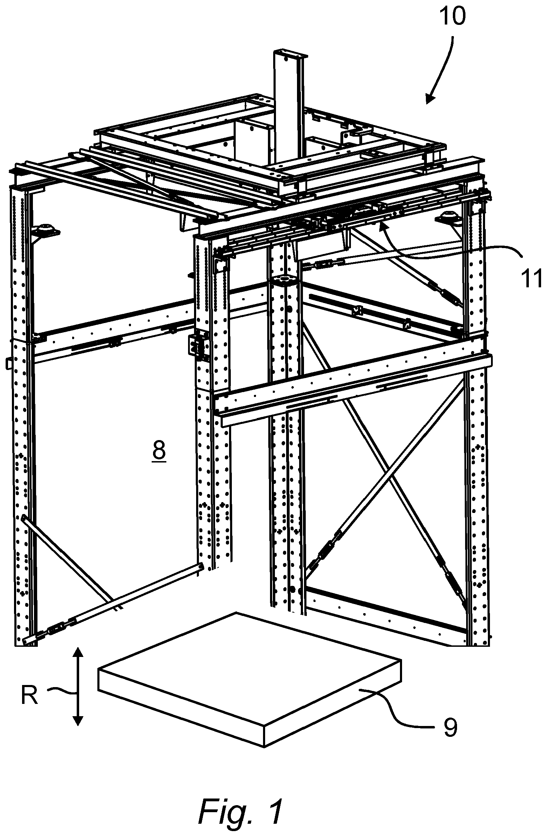

In der Fig. 1 ist eine beispielhafte Ausführungsform einer Vorrichtung 10 zum Kommissionieren von Stückgut 1 in einen Rollbehälter 2 dargestellt.

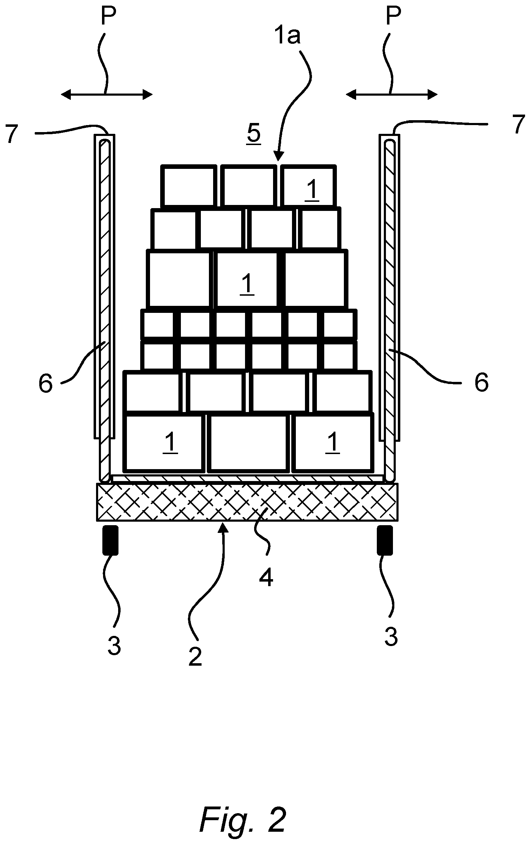

Der Rollbehälter 2 mit einem auf Rollen 3 fahrbaren Ladeboden 4 und zwei gegenüberliegend angeordnete, einen Lagerraum 5 des Rollbehälters 2 für das Stückgut 1 seitlich begrenzende Seitenwände 6 ist in Fig. 2 aufgezeigt. Die Seitenwände 6 erstrecken sich von zwei gegenüberliegenden Randabschnitten des fahrbaren Ladebodens 4 nach oben.

Die Vorrichtung 10 zum Kommissionieren von Stückgut 1 in einen Rollbehälter 2 umfasst einen Kommissionierschacht 8 mit Aufnahmetaschen 7 für die Seitenwände 6 des Rollbehälters 2, die im Falle des vorliegenden Ausführungsbeispiels in Pfeilrichtungen P zwischen einer Ruhestellung und einer Funktionsstellung automatisch verstellbar sind. Die Aufnahmetaschen 7 sind ausgebildet, während eines Kommissionierens von Stückgütern 1 auf den Ladeboden 4 des Rollbehälters 2 innerhalb des Kommissionierschachtes 8, die Seitenwände 6 des Rollbehälters 2 zumindest teilweise oder vollständig aufzunehmen.

Die Vorrichtung 10 zum Kommissionieren von Stückgut 1 in einen Rollbehälter 2 umfasst außerdem eine innerhalb des Kommissionierschachtes 8 höhenverstellbare Plattform 9, die ausgebildet ist zum Abstellen eines Rollbehälters 2 derart, dass durch ein Höhenverstellen der Plattform 9 der darauf abgestellte Rollbehälter 2 innerhalb des Kommissionierschachtes 8 angehoben und/oder abgesenkt werden kann.

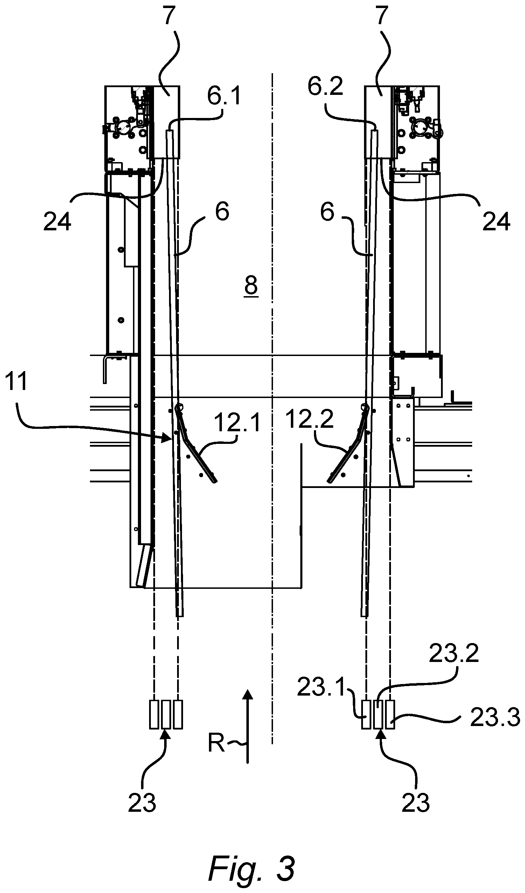

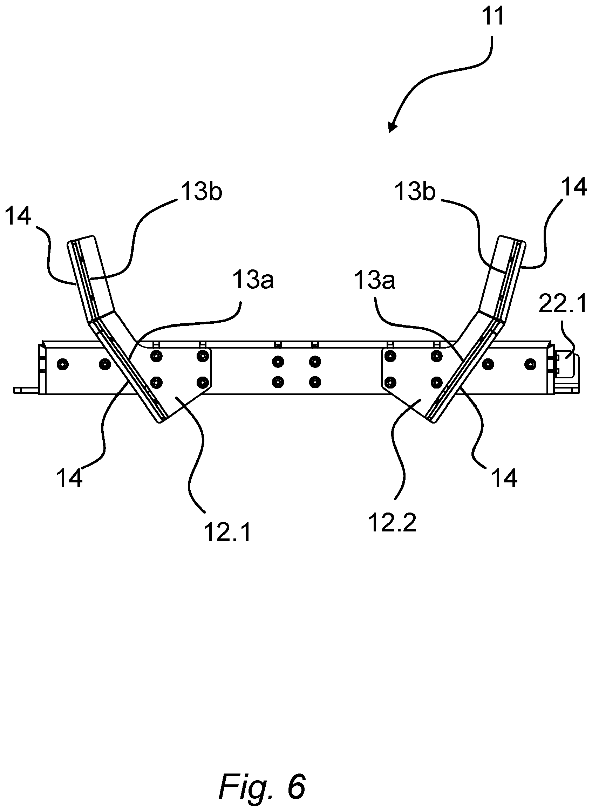

Wie in Fig. 3 bis Fig. 6 dargestellt ist, umfasst die Vorrichtung 10 zum Kommissionieren von Stückgut 1 in einen Rollbehälter 2 darüber hinaus eine Zuführeinrichtung 11, welche gegenüberliegend angeordnete Führungsleitschienen 12.1, 12.2 aufweist, die ausgebildet sind, aufeinander zugestellte Oberkanten 6.1, 6.2 der beiden Seitenwände 6 des Rollbehälters 2 derart weit voneinander wegzustellen, während der auf der Plattform 9 abgestellte Rollbehälter 2 innerhalb des Kommissionierschachtes 8 angehoben wird, so dass die Oberkanten 6.1, 6.2 der beiden Seitenwände 6 des Rollbehälters 2 in die beiden Aufnahmetaschen 7 eintauchen können.

Im Falle des vorliegenden Ausführungsbeispiels weist die Zuführeinrichtung 11 zwei gegenüberliegend angeordnete Führungsleitschienen 12.1, 12.2 auf, die jeweils von einer starr angeordneten Führungsplatte 12a, 12b gebildet wird, die sich von einer engstehenden Unterkante UK der jeweiligen Führungsplatte 12a, 12b zu einer weitstehenden Oberkante OK der Führungsplatte 12a, 12b erstreckt.

Jede Führungsplatte 12a, 12b weist im Falle des vorliegenden Ausführungsbeispiels einen unteren Führungsplattenabschnitt 13a auf, deren Flächennormale mit einer vertikalen Bewegungsrichtung R der Plattform 9 einen kleineren Anstellwinkel aufweist und einen sich an den unteren Führungsplattenabschnitt 13a anschließenden oberen Führungsplattenabschnitt 13b aufweist, deren Flächennormale mit der vertikalen Bewegungsrichtung R der Plattform 9 einen größeren Anstellwinkel aufweist.

Im Falle des vorliegenden Ausführungsbeispiels weist jede Führungsleitschiene 12.1, 12.2 eine reibungsmindernde Oberflächenschicht 14 auf.

Die entsprechende Oberflächenschicht 14 kann beispielsweise von einer Beschichtung gebildet werden, die auf die Oberfläche der Führungsleitschiene 12.1, 12.2 bzw. auf die Oberfläche des unteren Führungsplattenabschnitts 13a und/oder des oberen Führungsplattenabschnitts 13b aufgetragen ist.

Alternativ kann die Oberflächenschicht 14 von einer separaten Schichtplatte gebildet werden, die an der Führungsleitschiene 12.1, 12.2 bzw. an dem unteren Führungsplattenabschnitt 13a und/oder an dem oberen Führungsplattenabschnitt 13b befestigt ist. Dazu können die separaten Schichtplatten beispielsweise mittels Schrauben an den Führungsleitschienen 12.1, 12.2 bzw. den Führungsplattenabschnitten 13a, 13b angeschraubt sein. Dies hat den Vorteil, dass gegebenenfalls verschlissene Schichtplatten auf einfache Weise ausgetauscht und durch neue separate Schichtplatten ersetzt werden können. Die Schraubenköpfe der Schrauben können in den separaten Schichtplatten versenkt angeordnet sein.

Die Beschichtungen und/oder die separaten Schichtplatten können beispielsweise aus einem Polyethylen-Werkstoff, insbesondere HDPE hergestellt sein. Alternativ können die Beschichtungen und/oder die separaten Schichtplatten beispielsweise auch aus einem PTFE-Werkstoff hergestellt sein.

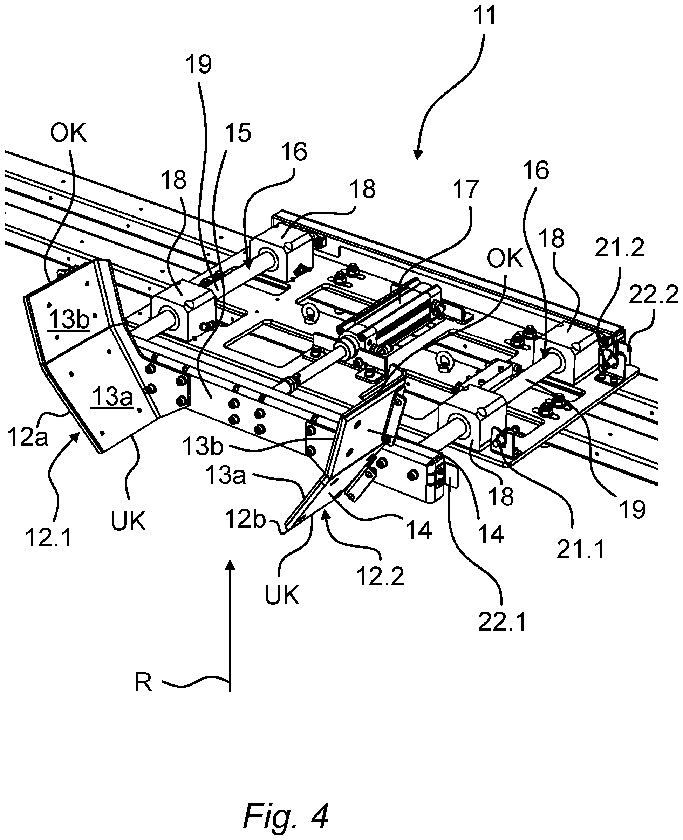

Wie in Fig. 4 bis Fig. 6 dargestellt ist, können die Führungsleitschienen 12.1, 12.2 an einem gemeinsamen Träger 15 befestigt sein, der bezüglich des Kommissionierschachtes 8 zwischen einer Verwahrungsstellung, in welcher die Führungsleitschienen 12.1, 12.2 aus dem Kommissionierschacht 8 entfernt sind, und einer Arbeitsstellung, in welcher die Führungsleitschienen 12.1, 12.2 zum voneinander Wegstellen der Oberkanten 6.1, 6.2 der beiden Seitenwände 6 des Rollbehälters 2 in den Kommissionierschacht 8 hineinragen, verstellbar ist.

Im Falle des vorliegenden Ausführungsbeispiels ist der Träger 15 mittels wenigstens einer Linearführung 16 an einem Grundgestell 17 der Vorrichtung 10 zwischen der Verwahrungsstellung der Führungsleitschienen 12.1, 12.2 und der Arbeitsstellung der Führungsleitschienen 12.1, 12.2 linear verstellbar gelagert.

Die Linearführungen 16 können beispielsweise Kugelumlauflager 18 aufweisen, in welchen Schienen 19 mit kreisförmigen Querschnitten in Richtung ihrer axialen Erstreckungen linear verstellbar geführt sind.

Der Träger ist im Falle des vorliegenden Ausführungsbeispiels mittels wenigstens eines ansteuerbaren Pneumatikzylinders 20 automatisch verstellbar an dem Grundgestell 17 der Vorrichtung 10 gelagert.

Die Zuführeinrichtung 11 umfasst einen ersten Positionssensor 21.1, der ausgebildet und eingerichtet ist, zu erfassen, wenn sich der Träger 15 und/oder die Führungsleitschienen 12.1, 12.2 in der Verwahrungsstellung befinden.

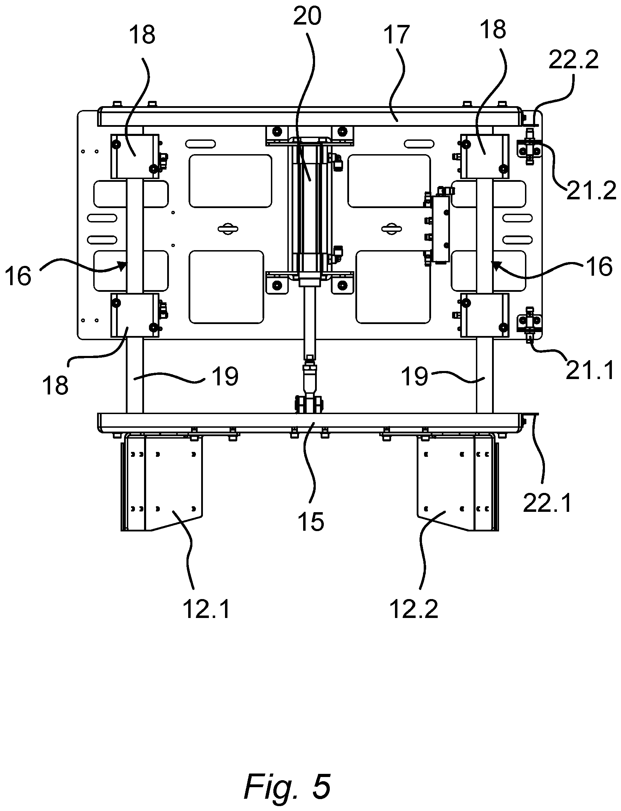

In der Verwahrungsstellung des Trägers 15 ist eine erste Referenzfläche 22.1 sehr nahe an dem ersten Positionssensor 21.1 positioniert, so dass der erste Positionssensor 21.1 die erste Referenzfläche 22.1 erfassen kann und ein zugeordnetes Signal an eine Steuervorrichtung übermitteln kann, die ihrerseits den Antrieb für das Bewegen des Trägers 15 automatisch ansteuert. Befindet sich der Träger 15 nicht in seiner Verwahrungsstellung ist die erste Referenzfläche 22.1 derart weit von dem ersten Positionssensor 21.1 entfernt positioniert, so dass der erste Positionssensor 21.1 die erste Referenzfläche 22.1 nicht mehr erfassen kann und demgemäß kein Signal an die Steuervorrichtung übermittelt. In Fig. 5 befindet sich der Träger 15 beispielsweise in der Arbeitsstellung, in welcher der erste Positionssensor 21.1 die erste Referenzfläche 22.1 nicht mehr erfassen kann.

Die Zuführeinrichtung 11 umfasst im Falle des vorliegenden Ausführungsbeispiels auch einen zweiten Positionssensor 21.2, der ausgebildet und eingerichtet ist, zu erfassen, wenn sich der Träger 15 und/oder die Führungsleitschienen 12.1, 12.2 in der Arbeitsstellung befinden. Die Arbeitsstellung ist in Fig 5 beispielhaft aufgezeigt.

In der Arbeitsstellung des Trägers 15 ist die zweite Referenzfläche 22.2 sehr nahe an dem zweiten Positionssensor 21.2 positioniert, so dass der zweite Positionssensor 21.2 die zweite Referenzfläche 22.2 erfassen kann und ein zugeordnetes Signal an eine Steuervorrichtung übermitteln kann, die ihrerseits den Antrieb für das Bewegen des Trägers 15 automatisch ansteuert. Befindet sich der Träger 15 nicht in seiner Arbeitsstellung ist die zweite Referenzfläche 22.2 derart weit von dem zweiten Positionssensor 21.2 entfernt positioniert, so dass der zweite Positionssensor 21.2 die zweite Referenzfläche 22.2 nicht mehr erfassen kann und demgemäß kein Signal an die Steuervorrichtung übermittelt.

Wie in Fig. 3 zusätzlich dargestellt ist, kann die Vorrichtung 10 eine optische Sensoreinrichtung 23 aufweisen, die ausgebildet und eingerichtet ist, zur Erkennung der Oberkanten 6.1, 6.2 der Seitenwände 6 eines in dem Kommissionierschacht 8 vorhandenen Rollbehälters 2, wenn sich die Oberkanten 6.1, 6.2 der Seitenwände 6 in einer vertikalen Flucht mit den Öffnungen 24 der Aufnahmetaschen 7 befinden.

Eine jeweilige optische Sensoreinrichtung 23 kann in einem Abstand unterhalb der Öffnung 24 einer Aufnahmetasche 7 angeordnet sein und eine optische Achse aufweisen, die zumindest im Wesentlichen auf die Öffnung 24 der Aufnahmetasche 7 gerichtet ist. Der Abstand der optischen Sensoreinrichtung 23 von der Öffnung 24 der Aufnahmetasche 7 definiert in Höhenrichtung den Freiraum innerhalb dem eine Oberkante 6.1, 6.2 einer Seitenwand 6 des Rollbehälters 2 unter die Öffnung 24 der Aufnahmetasche 7 eintreten kann. Wird die Oberkante 6.1, 6.2 der Seitenwand 6 des Rollbehälters 2 in den Strahlengang der optischen Achse der optischen Sensoreinrichtung 23 geführt, so erfasst die optische Sensoreinrichtung 23 dieses Ereignis und liefert an die Steuervorrichtung ein entsprechendes Signal.

Die optische Sensoreinrichtung 23 kann beispielsweise zwei oder drei Einzelsensoren 23.1, 23.2, 23.3 umfassen, die gemeinsam eine Öffnung 24 einer Aufnahmetasche 7 überwachen. Die mehreren Einzelsensoren 23.1, 23.2, 23.3 können insoweit auch eine redundante, gegebenenfalls diversitäre Erfassung ermöglichen.

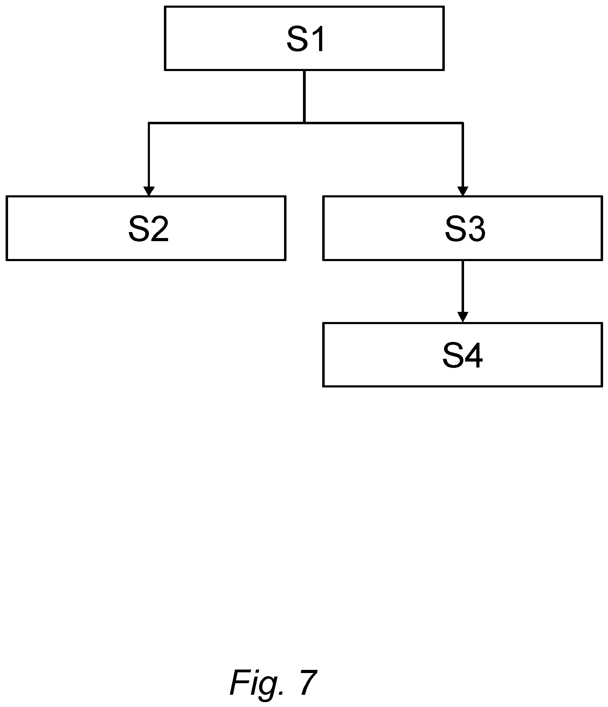

Die Fig. 7 zeigt schematisch einen beispielhaften Ablaufplan der Schritte in den erfindungsgemäßen Verfahren zum Ansteuern einer Zuführeinrichtung 11 einer Vorrichtung 10 zum Kommissionieren von Stückgut 1 in einen Rollbehälter 2.

In einem grundlegenden ersten Schritt S1 erfolgt ein automatisches Herausbewegen der Zuführeinrichtung 11 aus ihrer Verwahrungsstellung in ihre Arbeitsstellung, vor oder während eines Anhebens eines Rollbehälters 2, der auf einer höhenverstellbaren Plattform 9 innerhalb eines Kommissionierschachtes 8 positioniert ist, durch automatisch angesteuertes Hochfahren der höhenverstellbaren Plattform 9.

Das Verfahren kann in zwei alternativen Varianten durchgeführt werden, und zwar entweder mit dem Schritt S2 oder dem Schritt S3.

Im Schritt S2 des Verfahrens erfolgt das automatische Herausbewegen der Zuführeinrichtung 11 aus ihrer Verwahrungsstellung in ihre Arbeitsstellung unabhängig der momentanen Ausrichtung der Seitenwände 6 des Rollbehälters 2.

Im Schritt S3 des Verfahrens erfolgt das automatische Herausbewegen der Zuführeinrichtung 11 aus ihrer Verwahrungsstellung in ihre Arbeitsstellung ausschließlich dann, wenn die Seitenwände 6 des Rollbehälters 2 Ausrichtungen aufweisen, in denen die Oberkanten 6.1, 6.2 der Seitenwände 6 sich außerhalb einer vertikalen Flucht mit den Öffnungen 24 der Aufnahmetaschen 7 befinden.

In diesem letzter Fall kann das Verfahren mit dem Schritt S4 weitergebildet werden, indem die Ausrichtungen der Seitenwände 6, vor oder während eines automatisch angesteuerten Hochfahrens der höhenverstellbaren Plattform 9, um einen Rollbehälter 2, der auf der höhenverstellbaren Plattform 9 innerhalb des Kommissionierschachtes 8 positioniert ist, anzuheben, automatisch durch eine optische Sensoreinrichtung 23 erfasst werden und in Abhängigkeit der von der Sensoreinrichtung 23 erfassten Stellungen der Oberkanten 6.1, 6.2 der Seitenwände 6 bezüglich einer vertikalen Flucht mit den Öffnungen 24 der Aufnahmetaschen 7, die Zuführeinrichtung 11 automatisch aus ihrer Verwahrungsstellung in ihre Arbeitsstellung herausbewegt wird, wenn sich die Oberkanten 6.1, 6.2 der Seitenwände 6 nicht in einer vertikalen Flucht mit den Öffnungen 24 der Aufnahmetaschen 7 befinden, oder in ihrer Verwahrungsstellung verbleibt, wenn sich die Oberkanten 6.1, 6.2 der Seitenwände 6 bereits in einer vertikalen Flucht mit den Öffnungen 24 der Aufnahmetaschen 7 befinden.

### Bezugszeichenliste

- 1: Stückgut
- 2: Rollbehälter
- 3: Rollen
- 4: Ladeboden
- 5: Lagerraum
- 6: Seitenwände
- 6.1: Oberkante
- 6.2: Oberkante
- 7: Aufnahmetaschen
- 8: Kommissionierschacht
- 9: Plattform
- 10: Vorrichtung
- 11: Zuführeinrichtung
- 12.1: Führungsleitschiene
- 12.1: Führungsleitschiene
- 12a: Führungsplatte
- 12b: Führungsplatte
- 13a: unteren Führungsplattenabschnitt
- 13b: oberen Führungsplattenabschnitt
- 14: Oberflächenschicht
- 15: Träger
- 16: Linearführung
- 17: Grundgestell
- 18: Kugelumlauflager
- 19: Schienen
- 20: Pneumatikzylinder
- 21.1: erster Positionssensor
- 21.2: zweiter Positionssensor
- 22.1: erste Referenzfläche
- 22.2: zweite Referenzfläche
- 23: optische Sensoreinrichtung
- 23.1: Einzelsensor
- 23.2: Einzelsensor
- 23.3: Einzelsensor
- 24: Öffnung
- OK: Oberkante der Führungsplatte
- UK: Unterkante der Führungsplatte

## Patentansprüche

1. Vorrichtung zum Kommissionieren von Stückgut (1) in einen Rollbehälter (2), der einen auf Rollen (3) fahrbaren Ladeboden (4) und zwei gegenüberliegend angeordnete, einen Lagerraum (5) des Rollbehälters (2) für das Stückgut (1) seitlich begrenzende Seitenwände (6) umfasst, die sich von zwei gegenüberliegenden Randabschnitten des fahrbaren Ladebodens (4) nach oben erstrecken, aufweisend:
- einen Kommissionierschacht (8) mit Aufnahmetaschen (7) für die Seitenwände (6) eines Rollbehälters (2), wobei die Aufnahmetaschen (7) ausgebildet sind, während eines Kommissionierens von Stückgütern (1) auf den Ladeboden (4) des Rollbehälters (2) innerhalb des Kommissionierschachtes (8), die Seitenwände (6) des Rollbehälters (2) zumindest teilweise oder vollständig aufzunehmen,
- eine innerhalb des Kommissionierschachtes (8) höhenverstellbare Plattform (9), die ausgebildet ist zum Abstellen eines Rollbehälters (2) derart, dass durch ein Höhenverstellen der Plattform (9) der darauf abgestellte Rollbehälter (2) innerhalb des Kommissionierschachtes (8) angehoben und/oder abgesenkt werden kann, und
- eine Zuführeinrichtung (11), welche gegenüberliegend angeordnete Führungsleitschienen (12.1, 12.2) aufweist, die ausgebildet sind, aufeinander zugestellte Oberkanten (6.1, 6.2) der beiden Seitenwände (6) eines Rollbehälters (2) derart weit voneinander wegzustellen, während der auf der Plattform (9) abgestellte Rollbehälter (2) innerhalb des Kommissionierschachtes (8) angehoben wird, dass die Oberkanten (6.1, 6.2) der beiden Seitenwände (6) des Rollbehälters (2) in die beiden Aufnahmetaschen (7) eintauchen können.

2. Vorrichtung nach Anspruch 1, **dadurch gekennzeichnet, dass** die Zuführeinrichtung (11) zwei gegenüberliegend angeordnete Führungsleitschienen (12.1, 12.2) aufweist, die jeweils von einer starr angeordneten Führungsplatte (12a, 12b) gebildet wird, die sich von einer engstehenden Unterkante (UK) der Führungsplatte (12a, 12b) zu einer weitstehenden Oberkante (OK) der Führungsplatte (12a, 12b) erstreckt.

3. Vorrichtung nach Anspruch 2, **dadurch gekennzeichnet, dass** jede Führungsplatte (12a, 12b) einen unteren Führungsplattenabschnitt (13a) aufweist, deren Flächennormale mit einer vertikalen Bewegungsrichtung der Plattform (9) einen kleineren Anstellwinkel aufweist und einen sich an den unteren Führungsplattenabschnitt (13a) anschließenden oberen Führungsplattenabschnitt (13b) aufweist, deren Flächennormale mit der vertikalen Bewegungsrichtung der Plattform (9) einen größeren Anstellwinkel aufweist.

4. Vorrichtung nach einem der Ansprüche 1 bis 3, **dadurch gekennzeichnet, dass** jede Führungsleitschiene (12.1, 12.2) eine reibungsmindernde Oberflächenschicht (14) aufweist.

5. Vorrichtung nach einem der Ansprüche 1 bis 4, **dadurch gekennzeichnet, dass** die Führungsleitschienen (12.1, 12.2) an einem gemeinsamen Träger (15) befestigt sind, der bezüglich des Kommissionierschachtes (8) zwischen einer Verwahrungsstellung, in welcher die Führungsleitschienen (12.1, 12.2) aus dem Kommissionierschacht (8) entfernt sind, und einer Arbeitsstellung, in welcher die Führungsleitschienen (12.1, 12.2) zum voneinander Wegstellen der Oberkanten (6.1, 6.2) der beiden Seitenwände (6) des Rollbehälters (2) in den Kommissionierschacht (8) hineinragen, verstellbar ist.

6. Vorrichtung nach Anspruch 5, **dadurch gekennzeichnet, dass** der Träger (15) mittels wenigstens einer Linearführung (16) an einem Grundgestell (17) der Vorrichtung (10) zwischen der Verwahrungsstellung der Führungsleitschienen (12.1, 12.2) und der Arbeitsstellung der Führungsleitschienen (12.1, 12.2) linear verstellbar gelagert ist.

7. Vorrichtung nach Anspruch 6, **dadurch gekennzeichnet, dass** der Träger (15) mittels wenigstens eines ansteuerbaren Pneumatikzylinders (20) automatisch verstellbar an dem Grundgestell (17) der Vorrichtung (10) gelagert ist.

8. Vorrichtung nach einem der Ansprüche 5 bis 7, **gekennzeichnet durch** einen ersten Positionssensor (21.1), der ausgebildet und eingerichtet ist, zu erfassen, wenn sich der Träger (15) und/oder die Führungsleitschienen (12.1, 12.2) in der Verwahrungsstellung befinden.

9. Vorrichtung nach einem der Ansprüche 5 bis 8, **gekennzeichnet durch** einen zweiten Positionssensor (21.2), der ausgebildet und eingerichtet ist, zu erfassen, wenn sich der Träger (15) und/oder die Führungsleitschienen (12.1, 12.2) in der Arbeitsstellung befinden.

10. Vorrichtung nach einem der Ansprüche 1 bis 9, **gekennzeichnet durch** eine optische Sensoreinrichtung (23), die ausgebildet und eingerichtet ist, zur Erkennung der Oberkanten (6.1, 6.2) der Seitenwände (6) eines in dem Kommissionierschacht (8) vorhandenen Rollbehälters (2), wenn sich die Oberkanten (6.1, 6.2) der Seitenwände (6) in einer vertikalen Flucht mit den Öffnungen (24) der Aufnahmetaschen (7) befinden.

11. Verfahren zum Ansteuern einer Zuführeinrichtung (11) einer Vorrichtung (10) nach einem der Ansprüche 1 bis 10, aufweisend den Schritt:
- automatisches Herausbewegen der Zuführeinrichtung (11) aus ihrer Verwahrungsstellung in ihre Arbeitsstellung, vor oder während eines Anhebens eines Rollbehälters (2), der auf der höhenverstellbaren Plattform (9) innerhalb des Kommissionierschachtes (8) positioniert ist, durch automatisch angesteuertes Hochfahren der höhenverstellbaren Plattform (9).

12. Verfahren nach Anspruch 11, **dadurch gekennzeichnet, dass** das automatische Herausbewegen der Zuführeinrichtung (11) aus ihrer Verwahrungsstellung in ihre Arbeitsstellung unabhängig der momentanen Ausrichtung der Seitenwände (6) des Rollbehälters (2) erfolgt.

13. Verfahren nach Anspruch 11, **dadurch gekennzeichnet, dass** das automatische Herausbewegen der Zuführeinrichtung (11) aus ihrer Verwahrungsstellung in ihre Arbeitsstellung ausschließlich dann erfolgt, wenn die Seitenwände (6) des Rollbehälters (2) Ausrichtungen aufweisen, in denen die Oberkanten (6.1, 6.2) der Seitenwände (6) sich außerhalb einer vertikalen Flucht mit den Öffnungen (24) der Aufnahmetaschen (7) befinden.

14. Verfahren nach Anspruch 13, **dadurch gekennzeichnet, dass** die Ausrichtungen der Seitenwände (6), vor oder während eines automatisch angesteuerten Hochfahrens der höhenverstellbaren Plattform (9), um einen Rollbehälter (2), der auf der höhenverstellbaren Plattform (9) innerhalb des Kommissionierschachtes (8) positioniert ist, anzuheben, automatisch durch eine optische Sensoreinrichtung (23) erfasst werden und in Abhängigkeit der von der Sensoreinrichtung (23) erfassten Stellungen der Oberkanten (6.1, 6.2) der Seitenwände (6) bezüglich einer vertikalen Flucht mit den Öffnungen (24) der Aufnahmetaschen (7), die Zuführeinrichtung (11) automatisch aus ihrer Verwahrungsstellung in ihre Arbeitsstellung herausbewegt wird, wenn sich die Oberkanten (6.1, 6.2) der Seitenwände (6) nicht in einer vertikalen Flucht mit den Öffnungen (24) der Aufnahmetaschen (7) befinden, oder in ihrer Verwahrungsstellung verbleibt, wenn sich die Oberkanten (6.1, 6.2) der Seitenwände (6) bereits in einer vertikalen Flucht mit den Öffnungen (24) der Aufnahmetaschen (7) befinden.
